# EUROPÄISCHE PATENTSCHRIFT

(11) **EP 0 359 948 B1**
(45) Veröffentlichungstag und Bekanntmachung des Hinweises auf die Patenterteilung: **19.01.1994**
(21) Anmeldenummer: 89113820.8
(22) Anmeldetag: 27.07.1989
(51) Int. Cl.: F16L 55/033

(54) **Geräuschdämpfer**
Noise absorber
Silencieux

(30) Priorität: 21.09.1988 DE 3832030
(43) Veröffentlichungstag der Anmeldung: 28.03.1990
(73) Patentinhaber: WABCO Vermögensverwaltungs-GmbH, D-30432 Hannover (DE)
(72) Erfinder: Deike, Karl-Heinz, D-3017 Pattensen 5 (DE); Kiel, Bernd-Joachim, D-3050 Wunstorf 1 (DE); König, Heinz-Werner, D-3013 Barsinghausen 8 (DE); Lippelt, Frank-Dietmar, D-3013 Barsinghausen 1 (DE); Pohl, Wolfgang, D-3008 Garbsen 6 (DE)
(74) Vertreter: Schrödter, Manfred, Dipl.-Ing.

(56) Entgegenhaltungen:
- EP-A- 0 243 559
- DE-A- 2 035 139
- DE-A- 2 346 546
- DE-A- 3 724 087
- GB-A- 919 477

## Beschreibung

Die Erfindung betrifft einen Geräuschdämpfer für eine Druckluft-Entlüftungseinrichtung gemäß dem Oberbegriff des Patentanspruchs 1.

Ein derartiger Geräuschdämpfer ist aus der DE-OS 18 01 447 bekannt.

Dieser bekannte Geräuschdämpfer weist ein in einem Gehäuse angeordnetes erstes Rohr auf, das mit einem Strömungsmitteleinlaß verbunden ist. Das erste Rohr ist auf seiner dem Einlaß gegenüberliegenden Seite von einer gewölbt ausgebildeten Platte verschlossen, die als Prallplatte dient.
In der Wand des Rohres sind Durchlässe für das Strömungsmittel vorgesehen.

Im Gehäuseinnenraum sind dem ersten Rohr mehrere Rohre unterschiedlicher Länge nachgeschaltet. Die Rohre sind achsparallel zueinander und seitlich gegeneinander versetzt, sich in eine zusätzliche Kammer hineinerstreckend so zueinander und so zu einem Auslaß für das Strömungsmittel angeordnet, daß das Strömungsmittel durch das eine Rohr in die zusätzliche Kammer eintritt und durch das andere Rohr aus dieser austritt. Über ein weiteres, die zusätzliche Kammer durchdringendes Rohr gelangt aus einem Raum, der zwischen dem ersten Rohr und der zusätzlichen Kammer gelegen ist, Strömungsmittel direkt zum Auslaß.

Dieser bekannte Geräuschdämpfer hat durch die Anordnung einer dem Einlaß für das Strömungsmittel zugeordneten Prallplatte einen guten Wirkungsgrad.

Durch die Anordnung einer zusätzlichen Kammer im Gehäuse und die erforderlichen Befestigungsmittel für die sich in die zusätzliche Kammer hineinerstreckenden Rohre ist dieser bekannte Geräuschdämpfer jedoch aufwendig in der Herstellung. Unter ungünstigen Umständen ist ein ungewolltes Lösen der einzelnen Rohre [z.B. verursacht durch Vibrationen] nicht auszuschließen.

Der Erfindung liegt deshalb die Aufgabe zugrunde, einen Geräuschdämpfer der eingangs erwähnten Art zu schaffen, der einfach im Aufbau ist und ein hohes Maß an Sicherheit bietet.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, einen im Aufbau sehr einfachen Geräuschdämpfer zu erhalten, der sich leicht herstellen läßt und mit welchem eine überdurchschnittlich gute Geräuschdämpfung erzielt wird.

Dadurch, daß die Umlenkkanäle für die Druckluft von den Wandungen lediglich zweier Rohre und der Gehäuseinnenwand und der Expansionsraum sowie die mittels der Umlenkkanäle miteinander verbundenen Räume für die Druckluft ebenfalls von der Gehäuseinnenwand und der äußeren Mantelfläche dieser Rohre gebildet werden, sind keine zusätzlichen, den Gehäuseinnenraum unterteilenden Wände zur Begrenzung dieser Räume erforderlich.

Gemäß einer vorteilhaften Ausgestaltung der Erfindung sind in der Wand des zweiten Rohres des Geräuschdämpfers Mittel vorgesehen, die bei Überschreiten eines vorbestimmbaren maximal zulässigen Druckes im Innenraum des Gehäuses einen Durchlaß in der Wand des zweiten Rohres schaffen, durch welchen der Überdruck im Gehäuseinnenraum zur Atmosphäre hin abgebaut wird. Die Mittel können aus einer genau definierten Sollbruchstelle im zweiten Rohr oder auch aus einer Öffnung mit einer diese Öffnung verschließenden, nach Art eines Rückschlagventils wirkenden Platte bestehen. Es ist auch möglich, in der Wand des zweiten Rohres, möglichst dicht an das erste Rohr angrenzend, eine nach Art eines Bypaß-Kanals ausgebildete Öffnung vorzusehen, über welche der erste Expansionsraum ständig mit einem mit der Atmosphäre verbundenen Raum verbunden ist.

Eine weitere Überdrucksicherung kann in der Wand des Gehäuses des Geräuschdämpfers vorgesehen werden. Diese Überdrucksicherung kann ebenfalls aus einer Sollbruchstelle oder aus einer Öffnung, welche von einem Verschlußteil, wie z.B. einem Stopfen oder einer Kugel, verschlossen wird, bestehen.

Die in der Wand des Gehäuses des Geräuschdämpfers angeordnete Überdrucksicherung kann, wie bereits erwähnt, aus einer Öffnung und einem diese Öffnung verschließenden Stopfen bestehen, wobei der Stopfen von einer vorzugsweise elastischen Platte in der Öffnung gehalten wird. Die elastische Platte kann z.B. ein Typenschild sein und wird in einem rahmenarteigen Teil an der äußeren Mantelfläche des Gehäuses gehalten.

Anhand der Zeichnung werden nachfolgend vier Ausführungsbeispiele der Erfindung näher erläutert.

Es zeigen:
- **Fig.1**: einen Geräuschdämpfer mit Prallplatte und zwei teleskopartig zueinander angeordneten Rohren, mittels welchen Umlenkkanäle für die Druckluft gebildet werden im Schnitt,
- **Fig.2**: einen Geräuschdämpfer wie in Fig.1 dargestellt, mit einer in der Gehäusewand vorgesehenen, als Sollbruchstelle ausgebildeten Überdrucksicherung und einem im Gehäuseinnenraum angeordneten Bypaß-Kanal
- **Fig.3**: einen Geräuschdämpfer gemäß Fig.1 mit einer in der Gehäusewand angeordneten, stopfenförmig ausgebildeten Überdrucksicherung
- **Fig.4**: einen Schnitt durch den Geräuschdämpfer im Bereich der an der Gehäusewand angeordneten Überdrucksicherung und
- **Fig.5**: einen Geräuschdämpfer gemäß Fig.1, bei welchem das eine Rohr eine von einer elastischen Klappe verschlossene Öffnung aufweist.

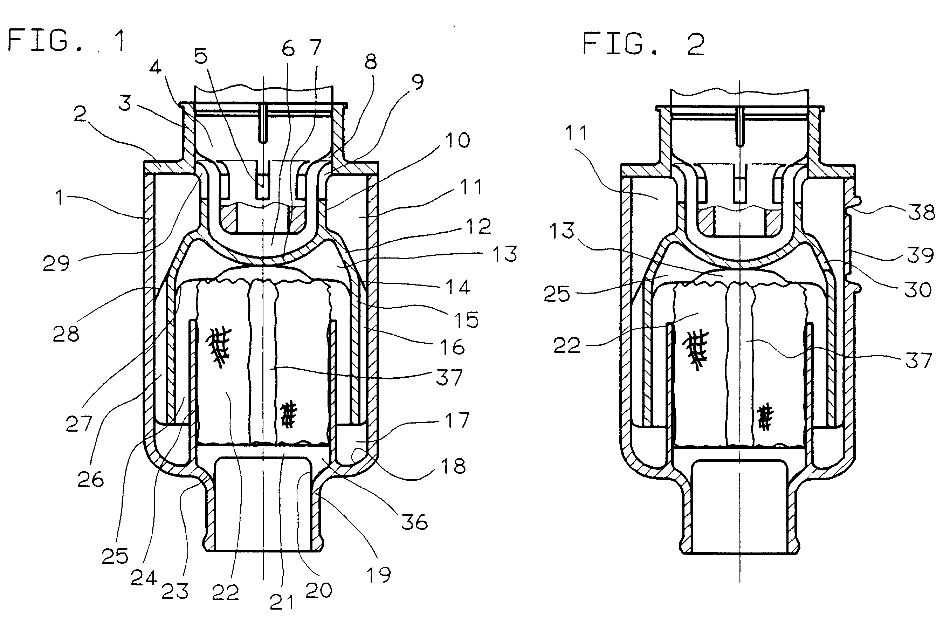

In Fig.1 ist ein Geräuschdämpfer dargestellt, der ein aus einem Gehäuseteil (1), einem ersten Deckel (2) und einem zweiten Deckel (23) bestehendes Gehäuse (1, 2, 23) aufweist, wobei das Gehäuseteil (1) an seinen beiden Enden mit je einem der beiden Deckel (2 bzw. 23) abgeschlossen ist. Der erste Deckel (2) besitzt eine Einlaßöffnung (8) mit einem Anschlußstutzen (3) zum Anschluß des Geräuschdämpfers, z.B. an einen Anschlußstutzen (4) eines zwischen einem Kompressor und einem Druckluftvorratsbehälter angeordneten Druckregelventils.

An die Einlaßöffnung (8) schließt ein mit dem ersten Deckel (2) verbundenes erstes Rohr (10) an, welches sich in den Innenraum des Gehäuses (1, 2, 23) hineinerstreckt. Das erste Rohr (10) ist an seinem der Einlaßöffnung (8) gegenüberliegenden Seite von einer als Prallplatte für die Druckluft dienenden Platte (7) verschlossen. Die Platte (7) ist in Richtung von der Einlaßöffnung (8) weg gewölbt ausgebildet. Ein von dem ersten Rohr (10) und der Platte (7) begrenzter Raum dient als Einlaßkammer (6) für die Druckluft. Über in der Wand des ersten Rohres (10) vorgesehene Durchlässe (5, 9, 29) ist die Einlaßkammer (6) mit dem Gehäuseinnenraum verbunden.

An dem ersten Rohr (10) ist ein zweites Rohr (15) angeordnet, welches einen größeren Querschnitt als das erste Rohr (10) aufweist. Das zweite Rohr (15) weist auf seiner dem ersten Rohr (10) zugewandten Seite einen sich auf das erste Rohr (10) zu konisch verjüngenden Bereich (12) auf, mit welchem es in etwa in Höhe der Platte (7) an das erste Rohr (10) angeformt ist.

Vom ersten Rohr (10) ausgehend erstreckt sich das zweite Rohr (15) mit seiner offenen Seite in Richtung auf den zweiten Deckel (23) des Gehäuseteiles (1) zu. Das zweite Rohr (15, 12) kann selbstverständlich auch an der Platte (7) angeordnet sein. Gegenüber dem ersten Rohr (10) bzw. gegenüber der Platte (7) ist das zweite Rohr (15, 12) ganz oder überwiegend abgeschlossen angeordnet.

Der Querschnitt des ersten Rohres (10) und der konische Bereich (12) des zweiten Rohres (15, 12) sowie der Querschnitt des Gehäuseteiles (1) sind so bemessen, daß von der Ringfläche des ersten Deckels (2), der äußeren Mantelfläche des ersten Rohres (10), der äußeren Mantelfläche des konischen Bereiches (12) des zweiten Rohres (15, 12) und von einem Teil der Innenwand des Gehäuseteiles (1) ein als Expansionsraum (11) dienender erster Raum gebildet wird, in welchem sich die von der Einlaßkammer (6) durch die Durchlässe (5, 9, 29) des ersten Rohres (10) strömende Druckluft entspannt.

Das zweite Rohr (15, 12) weist an seiner äußeren Mantelfläche in Richtung seiner Längsachse verlaufende Rippen (14, 28) auf, die sich auf die Innenwand des Gehäuseteiles (1) zu erstrecken und an dieser anliegen.
Die Rippen (14, 28) verhindern ein Schwingen des zweiten Rohres (15, 12) und somit auch des ersten Rohres (10).

Der zweite Deckel (23) des Gehäuses (1, 2, 23) weist eine Auslaßöffnung (20) mit einem an diese anschliessenden Auslaßstutzen (19) auf. Am zweiten Deckel (23) des Gehäuses (1, 2, 23) ist ein die Auslaßöffnung (20) umgebendes drittes Rohr (24) angeordnet. Das dritte Rohr (24) ist koaxial zum zweiten Rohr (15, 12) angeordnet und erstreckt sich mit seiner dem zweiten Deckel (23) des Gehäuses (1, 2, 23) abgewandten Seite in Richtung auf den einlaßseitigen Deckel (2) zu, wobei es in das zweite Rohr (15, 12) hineinragt.

Das zweite Rohr (15, 12) und das dritte Rohr (24) sind in Richtung ihrer axialen Erstreckung so bemessen, daß sie sich auf einem Teilbereich ihrer axialen Erstreckung gegenseitig überdecken.

Das Gehäuseteil (1) und das zweite Rohr (15, 12) sind in ihrem Querschnitt so bemessen, daß von wenigstens einem Teilbereich der Innenwand des Gehäuseteiles (1) und von der äußeren Mantelfläche des zweiten Rohres (15, 12) ein erster Kanal (16) gebildet wird, der den Expansionsraum (11) mit einem ringförmigen zweiten Raum (17) verbindet, der als ein zweiter Expansionsraum für die Druckluft dienen kann.

Der zweite Raum (17) wird von dem Bereich des dritten Rohres (24), welcher nicht vom zweiten Rohr (15, 12) überdeckt ist, von einer dem Gehäuseinnenraum zugewandten Ringfläche (18) des zweiten Deckels (23) [Fläche des zweiten Deckels (23) zwischen der Mantelfläche des dritten Rohres (24) und der Innenwand des Gehäuseteiles (1)] und von einem Teilbereich der Innenwand des Gehäuseteiles (1) begrenzt.

Der Übergang von dem den Raum (17) begrenzenden Teil des zweiten Deckels (23) zur Wand des Gehäuseteiles (1) ist strömungsgünstig abgerundet ausgebildet. In gleicher Weise ist der Übergang zwischen der äußeren Mantelfläche des dritten Rohres (24) und dem Teil des zweiten Deckels (23), welcher den zweiten Raum (17) begrenzt, abgerundet.

Der Querschnitt des dritten Rohres (24) und der Querschnitt des zweiten Rohres (15, 12) sind so bemessen, daß ein zweiter Kanal (25) von der Innenwand des zweiten Rohres (15, 12) und der äußeren Mantelfläche des dritten Rohres (24) in dem sich gegenseitig überdeckenden Bereich der beiden Rohre (15, 12 und 24) gebildet wird.

Der zweite Kanal (25) verbindet den zweiten Raum (17) mit einem dritten Raum (13), der ebenfalls die Funktion eines Expansionsraumes für die Druckluft haben kann.
Der dritte Raum (13) wird von dem Bereich der Innenwand des zweiten Rohres (15, 12), der nicht vom dritten Rohr (24) überdeckt wird, von der Platte (7) und einem im dritten Rohr (24) angeordneten Dämpfungsmaterial, wie z.B. einen Metallgewebekörper (22) begrenzt.
Über den Raum (17) sind der erste Kanal (16, 26) und der zweite Kanal (25) miteinander verbunden.

Das Dämpfungsmaterial (22) stützt sich auf einem Steg (21) ab, der quer zur Längsachse des dritten Rohres (24) verlaufend im dritten Rohr (24) vorgesehen ist. Der Steg (21) ist außermittig im dritten Rohr (24) angeordnet, um nicht einen Teil einer als Notpassage für die Druckluft dienenden, zentrisch das Dämpfungsmaterial (22) durchdringenden Öffnung (37) abzudecken.

Um zu verhindern, daß das Dämpfungsmaterial (22) direkt auf der Auslaßöffnung (20) aufliegt, ist der Steg (21) in einem bestimmten Abstand zum zweiten Deckel (23) des Gehäuses (z.B. 5 bis 10 mm) angeordnet. Zwischen dem die Auslaßöffnung (20) aufweisenden Teil des zweiten Deckels (23) und der der Auslaßöffnung zugewandten Seite des Dämpfungsmaterials (22) wird so ein ringkammerartiger Spalt (36) gebildet. An der dem dritten Raum (13) zugewandten Seite der Platte (7) sind sich auf das Dämpfungsmaterial (22) zu erstreckende rippenartige Vorsprünge (27) angeordnet, die eine Bewegung des Dämpfungsmaterials (22) in Richtung auf die Platte (7) zu verhindern. Das Dämpfungsmaterial (22) wird in Richtung seiner Längsachse somit von diesen Vorsprüngen (27) und dem Steg (21) gehalten.

Es ist selbstverständlich möglich, die Rippen (14, 28) am zweiten Rohr (15, 12) durch andersartig geformte Vorsprünge [noppenartig] zu ersetzen oder derartige Rippen bzw. Vorsprünge gänzlich wegzulassen. In einem solchen Fall ist auch der erste Kanal (16) nach Art eines Ringkanals ausgebildet. Die Rippen (14, 28) am zweiten Rohr (15, 12) können sich auch bis zum zweiten Deckel (23) hin erstrecken.

Die Durchlässe (5, 9, 29) in der Wand des ersten Rohres (10) sollen möglichst weit von der als Prallplatte dienenden Platte (7) entfernt vorgesehen werden, und die Länge des ersten Rohres (10) soll so bemessen sein, daß der Auslaßstutzen (4) des Gerätes, an den der Geräuschdämpfer angeschlossen wird, so weit in das erste Rohr (10) eintaucht, daß von der äußeren Mantelfläche des Auslaßstutzens dieses Gerätes und von der Innenwand des ersten Rohres (10) ein Ringkanal gebildet wird, durch welchen die Druckluft nach dem Aufprallen auf die gewölbte Platte (7) zu den Durchlässen (5, 9, 29) des ersten Rohres (10) geleitet wird.

Es ist auch denkbar, zur Bildung eines solchen zusätzlichen Ringkanals einen nach Art eines Adapters wirkenden, einem Auslaßstutzen nachgebildeten rohrförmigen Körper in den Anschlußstutzen (3) des Geräuschdämpfers einzusetzen.

Der erst Deckel (2) mit Anschlußstutzen (3) und das die Platte (7) aufweisende erste Rohr (10) sowie das mit diesem verbundene zweite Rohr (15, 12) sind als eine einstückige Baueinheit ausgebildet, z.B. als Kunststoffspritzteil. Selbstverständlich ist auch ein anderes Material als Kunststoff denkbar, beispielsweise Metall. Diese als eine einstückige Baueinheit ausgeführten Teile können selbstverständlich auch in verschiedenen Arbeitsgängen als Einzelteile hergestellt und mittels geeigneter Verbindungsmittel und Verbindungsarten miteinander verbunden werden [beispielsweise Schraubverbindungen].

Das Gehäuseteil (1) kann mit dem zweiten Deckel (23), dem dritten Rohr (24) und dem Steg (21) als eine einstückige Baueinheit ausgebildet sein und z.B. als Kunststoffspritzteil hergestellt werden. Diese einstückige Baueinheit kann aus Kunststoff oder auch aus einem anderen Material, wie z.B. Metall, bestehen. Es ist auch möglich, das Gehäuseteil (1), den zweiten Deckel (23), das dritte Rohr (24) und ein Haltelement für das Dämpfungsmaterial (22) in verschiedenen Arbeitsgängen einzeln herzustellen und diese dann zu einer Baueinheit zusammenzufügen.

Das erste Rohr (10) und das zweite Rohr (15, 12) können aus einem einzigen rohrförmigen Körper mit konstantem Querschnitt bestehen. Der rohrförmige Körper wird von einer in diesem angeordneten Platte in eine Einlaßkammer, die mit der Einlaßöffnung verbunden ist, und in eine Expansionskammer, die über das Dämpfungsmaterial mit der Auslaßöffnung verbunden ist, unterteilt.

Die in den Figuren 2, 3 und 5 dargestellten Geräuschdämpfer weisen den gleichen Aufbau wie der Geräuschdämpfer gemäß Fig.1 auf. Jedoch sind im bzw. am Geräuschdämpfer nach den Figuren 2, 3 und 5 eine erste Überdrucksicherung und ein Bypaß-Kanal bzw. eine zweite Überdrucksicherung vorgesehen.
Der besseren Übersicht halber sind die den in Fig.1 gezeigten Bauteilen und Räumen entsprechenden Bauteile und Räume mit gleichen Bezugsziffern versehen.

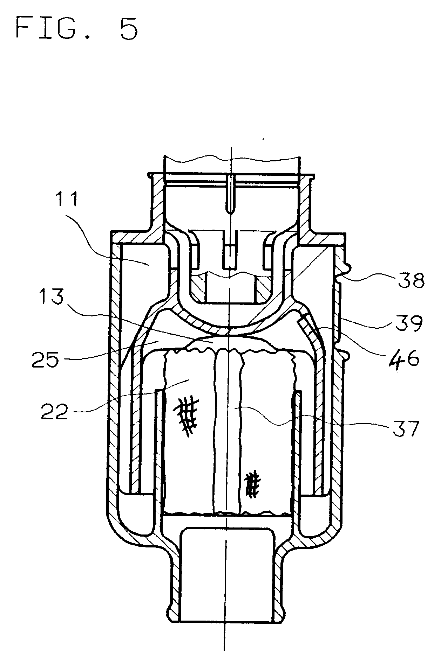

Nach Fig.2 ist in der Wand des zweiten Rohres eine als Bypaß-Kanal dienende Öffnung (30) vorgesehen, die den Expansionsraum (11) mit dem dritten Raum (13), der vom Dämpfungsmaterial (22) begrenzt wird, verbindet.
Die Öffnung (30) kann, wie in Fig. 5 dargestellt, von einer federnd ausgebildeten Lasche (46) verschlossen sein, die bei Überschreiten einer vorbestimmbaren Höhe des Druckes im Expansionsraum (11) von der Druckluft in Richtung auf den dritten Raum (13) zu bewegt wird und die Öffnung (30) freigibt.

Eine weitere Überdrucksicherung ist in der Wand des Gehäuseteiles (1) angeordnet. Diese Überdrucksicherung besteht aus einem vorzugsweise kreisrunden Wandungsteil (39), welches dünner ausgebildet ist als die übrige Wand des Gehäuseteiles (1).
Das dünnere Wandungsteil (39) wird von einer Wulst (38) gehalten, wobei das eine Ende der Wulst mit der Wand des Gehäuseteiles (1) und das andere Ende der Wulst mit dem dünneren Wandungsteil (39) verbunden ist. Der Übergang von der Wulst (38) bzw. von der Gehäusewand (1) zum Wandungsteil (39) ist relativ dünn ausgebildet und bildet so die eigentliche Sollbruchstelle.

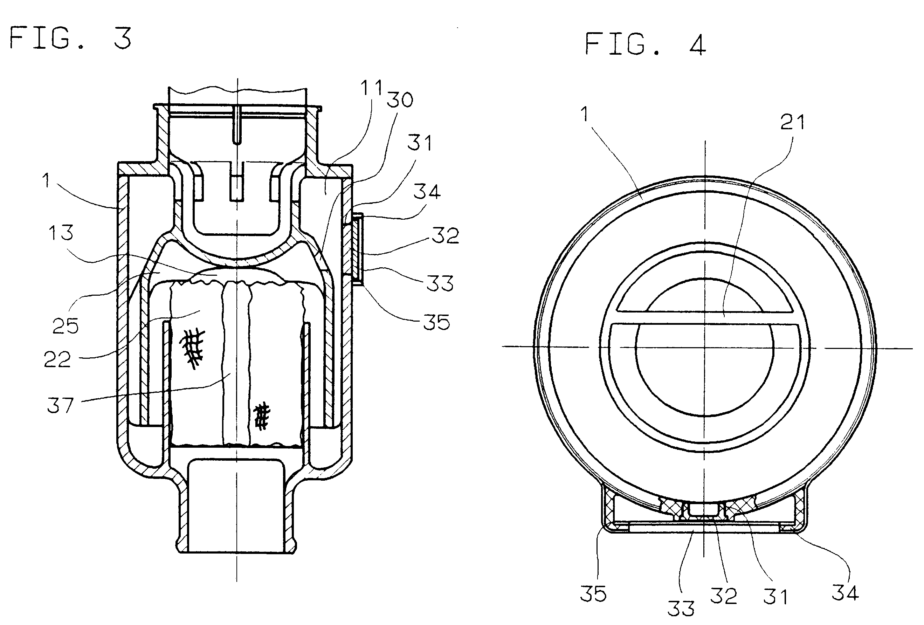

Die Überdrucksicherung kann wie in den Figuren 3 und 4 dargestellt, aus einer in der Wand des Gehäuseteiles (1) angeordneten Öffnung (31) bestehen, in die ein stopfenartiges Verschlußteil (32) eingesetzt ist. Das Verschlußteil (32) wird von einer elastischen Platte (33), wie z.B. einem Typenschild, in der Öffnung (31) gehalten.
Als Halterung für die elastische Platte (33) dienen zwei am ersten Gehäuseteil (1) angeformte rahmenartige Halteelemente (34, 35). Das Verschlußteil (32) und die Platte (33) können als eine einstückige Baueinheit ausgebildet sein.

Die elastische Platte (33) ist so ausgelegt, daß sie vom Verschlußteil (32) elastisch verformt und gegebenenfalls aus ihrer Halterung herausgedrückt wird, wenn der Druck im Innenraum des Geräuschdämpfers einen vorbestimmten Wert überschreitet.

Die Funktion des im vorstehenden beschriebenen Geräuschdämpfers wird nachfolgend näher erläutert.

Es wird angenommen, daß die von einem zwischen einem Kompressor und einem Druckluftvorratsbehälter angeordneten Druckregelventil abgeblasene Druckluft der Einlaßkammer (6) des Geräuschdämpfers zugeführt wird. Der Druckluftstrom prallt auf die gewölbte Platte (7) auf, wird von dieser reflektiert und gelangt durch die Durchlässe (5, 9, 29) des ersten Rohres (10) in den Expansionsraum (11). Da der Expansionsraum (11) ein relativ großes Volumen hat, entspannt sich die Druckluft weitestgehend.

Von dem Expansionsraum (11) wird die Druckluft durch den ersten Kanal (16, 26) in den zweiten Raum (17) geführt.
Die im zweiten Raum (17) befindliche Druckluft wird in den zweiten Kanal (25) hinein umgelenkt und gelangt so in den dritten Raum (13).

Durch das im dritten Rohr (24) befindliche Dämpfungsmaterial (22) gelangt die Druckluft in den Raum (36) zwischen Dämpfungsmaterial (22) und zweiten Deckel (23) des Gehäuses (1, 2, 23) und verläßt den Geräuschdämpfer durch die Auslaßöffnung (20) sowie den an diesen anschließenden Auslaßstutzen (19) zur Atmosphäre hin.

Durch die Kombination von Reflexionsdämpfung [erstes Rohr (10) mit Prallplatte (7) und Expansionsraum (11) sowie Umlenkung im zweiten und dritten Raum] und Absorptionsdämpfung [Dämpfungsmaterial (22)] wird eine überdurchschnittlich gute Geräuschdämpfung erzielt.

Das Dämpfungsmaterial (22) wird von der in Richtung der Längsachse des Geräuschdämpfers verlaufenden Öffnung (37) durchdrungen, durch welche ein Teil der im dritten Raum (13) befindlichen Druckluft (2) zur Atmosphäre hin abströmen kann.

Sollte sich im zweiten Raum (17) Ölkohle ablagern oder Kondensat ansammeln und vereisen, so daß die Druckluft aus dem ersten Kanal (16, 26) nicht mehr in den zweiten Kanal (25) gelangen kann, bleibt der Geräuschdämpfer auch weiterhin funktionsfähig, da die Druckluft über die Öffnung (30) in den dritten Raum (13) strömen kann.
Die Öffnung (30) kann auch von einer genau definierten Sollbruchstelle erzeugt werden, wenn der Staudruck im Innenraum des Geräuschdämpfergehäuses einen vorbestimmten Höchstwert überschreitet. Eine vergleichbare Funktion kann natürlich auch ein in der Wand des zweiten Rohres (15, 12) angeordnetes Rückschlagventil erfüllen, das in Richtung auf den dritten Expansionsraum (13) zu in die Offenstellung bringbar ist.

Sollte sich durch widrige Umstände bedingt auch das Dämpfungsmaterial (22) zusetzen, so daß die Druckluft nicht aus dem Innenraum des Geräuschdämpfers abströmen kann, wodurch sich im Geräuschdämpfer ein Staudruck aufbauen würde, der auf die dem Geräuschdämpfer vorgeschalteten Geräte zurückwirken und möglicherweise zu Beschädigungen an diesen Geräten führen würde, so wird die in der Wand des Gehäuseteiles (1) angeordnete Überdrucksicherung wirksam.

Die in Fig.2 gezeigte dünne Wand (39) der Sollbruchstelle (38, 39) in der Wand des Gehäuseteiles (1) würde vom Überdruck im Innenraum des Geräuschdämpfers nach außen herausgebrochen werden und der Überdruck würde sich über die nun geschaffene Öffnung in der Wand des Gehäuseteiles (1) zur Atmosphäre hin abbauen.

In ähnlicher Weise würde der eine Öffnung (31) in der Wand des Gehäuseteiles (1) verschließende Stopfen (32), der von der elastischen Platte (33) in der Öffnung (31) gehalten wird, bei Überschreiten eines maximalen Staudruckwertes im Innenraum des Geräuschdämpfers aus der Öffnung (31) herausgedrückt werden und die Öffnung (31) freigeben. Bei diesem Vorgang würde auch die elastische Platte (33) aus ihrer rahmenartigen Halterung (34, 35) herausgedrückt werden.
Es ist natürlich auch möglich, die elastische Platte (33) einseitig am Gehäuseteil (1) zu befestigen, um ein Verlustiggehen der Platte (33) zu verhindern.

Die drei Rohre (10, 15 und 24) sowie das Gehäuseteil (1) sind vorzugsweise zylindrisch ausgebildet. Sie können jedoch auch eine andersartige Form aufweisen, z.B. eine ovale Form oder die Form eines Vielecks. In das Gehäuse (1, 2, 23) kann ein die drei Rohre (10, 15, 24) umgebendes Rohr (1) gebracht werden, daß z.B. als Auskleidung für das Gehäuse dienen kann.
Das Verschlußteil für die Überdrucksicherung kann als Stopfen oder auch als Kugel ausgebildet sein.

## Patentansprüche

1. Geräuschdämpfer für eine Druckluft-Entlüftungseinrichtung mit folgenden Merkmalen:
a) Der Geräuschdämpfer weist ein an seinen beiden Enden jeweils mit einem Deckel (2, 23) abgeschlossenes Gehäuse (1, 2, 23) auf, wobei in dem einen Deckel (2) eine Einlaßöffnung (8) und in dem anderen Deckel (23) eine Auslaßöffnung (20) für die Druckluft vorgesehen ist;
b) an die Einlaßöffnung (8) schließt ein mit dem zugehörigen Deckel (2) verbundenes erstes Rohr (10) an, das sich in das Gehäuse (1, 2, 23) hinein erstreckt;
c) das erste Rohr (10) ist an seinem der Einlaßöffnung (8) gegenüberliegenden Ende mittels einer als Prallplatte für die Druckluft dienenden Platte (7) verschlossen;
d) in der Wand des ersten Rohres (10) sind Durchlässe (5, 9, 29) für die Druckluft vorgesehen;
gekennzeichnet durch die folgenden Merkmale:
e) es ist ein zweites Rohr (15, 12) vorgesehen, das mit seinem einen Ende an dem ersten Rohr (10) bzw. an der Platte (7) angeordnet und dort ganz oder überwiegend abgeschlossen ist;
f) das zweite Rohr (15,12) erstreckt sich in Richtung auf den auslaßseitigen Deckel (23) zu;
g) es ist ein drittes Rohr (24) vorgesehen, das mit seinem einen Ende die Auslaßöffnung (20) umgehend an dem zugehörigen Deckel (23) befestigt ist und das sich in Richtung auf den einlaßseitigen Deckel (2) zu erstreckt und in das zweite Rohr (15, 12) hineinragt;
h) die Innenwand des Gehäuseteiles (1) des Gehäuses (1, 2, 23) oder die Innenwand eines in das Gehäuse (1, 2, 23) eingebrachten Einsatzes und die äußere Mantelfläche des zweiten Rohres (15, 12) bilden einen erster Kanal (16) für die Druckluft, während die Innenwand des zweiten Rohres (15, 12) und die äußere Mantelfläche des dritten Rohres (24) in dem sich gegenseitig überdeckenden Bereich der beiden Rohre (15, 12 und 24) einen zweiten Kanal (25) für die Druckluft bilden, der mit dem ersten Kanal (16) verbunden ist;
i) in einem Teil des vom dritten Rohr (24) begrenzten Raumes ist ein Dämpfungsmaterial (22) für die durch den zweiten Kanal (25) strömende Druckluft angeordnet.

2. Geräuschdämpfer nach Anspruch 1, dadurch gekennzeichnet, daß der erste Deckel (2), das erste Rohr (10), das zweite Rohr (15, 12) und die Platte (7) als eine erste einstückige Baueinheit ausgebildet sind.

3. Geräuschdämpfer nach Anspruch 1, dadurch gekennzeichnet, daß das Gehäuseteil (1), der zweite Deckel (23) und das dritte Rohr (24) als eine zweite einstückige Baueinheit ausgebildet sind.

4. Geräuschdämpfer nach Anspruch 1, dadurch gekennzeichnet, daß das Gehäuseteil (1) mit dem zweiten Deckel (23) als ein einstückiges topfförmiges Gehäuseteil (1, 23) ausgebildet ist, das vom ersten Deckel (2) verschlossen wird.

5. Geräuschdämpfer nach wenigstens einem der vorhergehenden Ansprüche, dadurch gekennzeichnet, daß das zweite Rohr (15, 12) und das dritte Rohr (24) koaxial zueinander und koaxial zum Gehäuse (1, 2, 23) in Richtung der Längsachse des Gehäuses (1, 2, 23 verlaufend angeordnet sind.

6. Geräuschdämpfer nach Anspruch 2 und Anspruch 3, dadurch gekennzeichnet, daß die erste Baueinheit und die zweite Baueinheit als Kunststoffspritzteile hergestellt sind.

7. Geräuschdämpfer nach wenigstens einem der vorhergehenden Ansprüche 1 oder 2, dadurch gekennzeichnet, daß das erste Rohr (10) einen kleineren Querschnitt aufweist als das zweite Rohr (15, 12).

8. Geräuschdämpfer nach wenigstens einem der vorhergehenden Ansprüche 1 oder 2, dadurch gekennzeichnet, daß das zweite Rohr (15, 12) einen sich auf das erste Rohr (10) zu konisch verjüngenden Bereich (12) aufweist.

9. Geräuschdämpfer nach wenigstens einem der vorhergehenden Ansprüche, gekennzeichnet durch die folgenden Merkmale:
a) Von der Mantelfläche des ersten Rohres (10), einer dem Gehäuseinnenraum zugewandten Ringfläche des Deckels (2) und wenigstens einem Teilbereich der Innenwand des Gehäuseteiles (1) wird ein als Expansionsraum (11) dienender erster Raum gebildet;
b) von dem Bereich des dritten Rohres (24), der nicht vom zweiten Rohr (15, 12) überdeckt wird, sowie von einer den Gehäuseinnenraum zugewandten Ringfläche des zweiten Deckels (23) und wenigstens einem Teilbereich der Innenwand des Gehäuseteiles (1) wird ein als Ringraum ausgebildeter zweiter Raum (17) gebildet;
c) von dem Bereich der Innenwand des zweiten Rohres (15, 12), der nicht vom dritten Rohr (24) überdeckt wird, sowie von der Platte (7) und dem Dämpfungsmaterial (22) wird ein dritter Raum (13) gebildet;
d) der erste Raum (11) und der zweite Raum (17) sind über den ersten Kanal (16, 26) miteinander verbunden und der dritte Raum (13) steht über den zweiten Kanal (25) mit dem zweiten Raum (17) in Verbindung;
e) der dritte Raum (13) ist über das Dämpfungsmaterial (22) mit der Auslaßöffnung (20) verbunden.

10. Geräuschdämpfer nach Anspruch 9, dadurch gekennzeichnet, daß der erste Kanal (16) und der zweite Kanal (25) miteinander verbunden sind, wobei der erste Kanal (16) am ersten Raum (11) beginnend in Richtung auf den zweiten Deckel (23) des Gehäuses (1, 2, 23) zu verläuft, von dem freien Ende des zweiten Rohres (15, 12), dem zweiten Deckel (23) des Gehäuses (1) und der äußeren Mantelfläche des dritten Rohres (24) umgelenkt wird, in den zweiten Kanal (25) übergeht, wobei dieser in Richtung auf die Seite der Platte (7) zu verläuft, welche das zweite Rohr (15, 12) begrenzt und in dem von der Platte (7) der inneren Mantelfläche des zweiten Rohres (15, 12) sowie dem Dämpfungsmaterial (22) begrenzten dritten Raum (13) mündet.

11. Geräuschdämpfer nach wenigstens einem der vorhergehenden Ansprüche, dadurch gekennzeichnet, daß das erste Rohr (10), das zweite Rohr (15, 12) und das dritte Rohr (24) sowie das Gehäuse (1, 2) zylindrisch ausgebildet sind.

12. Geräuschdämpfer nach wenigstens einem der vorhergehenden Ansprüche, dadurch gekennzeichnet, daß im Gehäuse (1, 2, 23) ein rohrförmiger Einsatz angeordnet ist, der das erste Rohr (10), das zweite Rohr (15, 12) und das dritte Rohr (24) umgibt.

13. Geräuschdämpfer nach wenigstens einem der vorhergehenden Ansprüche, dadurch gekennzeichnet, daß der den zweiten Raum (17) begrenzende Teil des zweiten Deckels (23) zur Wand des Gehäuseteiles (1) hin abgerundet ausgebildet ist.

14. Geräuschdämpfer nach Anspruch 9, dadurch gekennzeichnet, daß zwischen der äußeren Mantelfläche des dritten Rohres (24) und dem Teil des zweiten Deckels (23), welcher den zweiten Raum (17) begrenzt, eine Abrundung vorgesehen ist.

15. Geräuschdämpfer nach wenigstens einem der vorhergehenden Ansprüche, dadurch gekennzeichnet, daß zwischen dem die Auslaßöffnung (20) aufweisenden Teil des zweiten Deckels (23) und der der Auslaßöffnung (20) zugewandten Seite des Dämpfungsmaterials (22) ein ringkammerartiger Spalt (36) vorgesehen ist.

16. Geräuschdämpfer nach wenigstens einem der vorhergehenden Ansprüche, dadurch gekennzeichnet, daß in der Wandung des zweiten Rohres (15, 12) eine Überdrucksicherung vorgesehen ist.

17. Geräuschdämpfer nach wenigstens einem der vorhergehenden Ansprüche, dadurch gekennzeichnet, daß in der Wand des Gehäuses (1, 2) eine Überdrucksicherung vorgesehen ist.

18. Geräuschdämpfer nach wenigstens einem der vorhergehenden Ansprüche, dadurch gekennzeichnet, daß in der Wand des zweiten Rohres (15, 12) eine einen Bypaß-Kanal bildende Öffnung (30) vorgesehen ist.

19. Geräuschdämpfer nach Anspruch 16, dadurch gekennzeichnet, daß die Überdrucksicherung als eine im zweiten Rohr (15, 12) angeordnete Sollbruchstelle ausgebildet ist, welche einen genau definierten Querschnitt aufweist.

20. Geräuschdämpfer nach Anspruch 16, dadurch gekennzeichnet, daß die Überdrucksicherung aus einer Öffnung (30) und einer diese Öffnung verschließenden elastischen Klappe (46) besteht, welche in Richtung auf den dritten Expansionsraum (13) zu in die Offenstellung bringbar ist.

21. Geräuschdämpfer nach Anspruch 17, dadurch gekennzeichnet, daß die Überdrucksicherung als eine genau definierte Sollbruchstelle ausgebildet ist, die aus einem gegenüber der Wand des topfförmigen Gehäuseteiles (1) dünneren Wandungsteil (39) besteht, welches von einer Wulst (38) gehalten wird, wobei die eine Seite der Wulst an der Wand des Gehäuseteiles (1) vorgesehen ist und die andere Seite der Wulst mit dem dünneren Wandungsteil (39) verbunden ist.

22. Geräuschdämpfer nach Anspruch 17, gekennzeichnet durch die folgenden Merkmale:
a) Als Überdrucksicherung ist in der Wand des Gehäuseteiles (1) eine Öffnung (31) vorgesehen, welche von einem Verschlußteil (32) verschlossen ist;
b) das Verschlußteil (32) wird von einer Platte (33), welche das Verschlußteil (32) überdeckend auf der Mantelfläche des Gehäuseteiles (1) aufliegt, in der Öffnung (31) gehalten;
c) die Platte (33) wird von wenigstens zwei rahmenartigen Halteelementen (34 und 35), welche an der Mantelfläche des Gehäuseteiles (1) angeformt sind, gehalten.

23. Geräuschdämpfer nach Anspruch 22, dadurch gekennzeichnet, daß die Platte als Typenschild für den Geräuschdämpfer ausgebildet ist.

24. Geräuschdämpfer nach Anspruch 22, dadurch gekennzeichnet, daß die Platte (33) aus einem elastischen Werkstoff besteht.

25. Geräuschdämpfer nach Anspruch 22, dadurch gekennzeichnet, daß das Verschlußteil (32) als Kugel ausgebildet ist.

26. Geräuschdämpfer nach Anspruch 22, dadurch gekennzeichnet, daß das Verschlußteil als Stopfen ausgebildet ist.

## Claims

1. A noise suppressor for a compressed air venting device, having the following features:
a) the noise suppressor has a housing (1, 2, 23) closed off at its two ends by respective covers (2, 23), an inlet opening (8) being provided in one cover (2) and an outlet opening (20) for the compressed air being provided in the other cover (23);
b) adjoining the inlet opening (8) there is a first tube (10) connected to the associated cover (2) and extending into the housing (1, 2, 23);
c) the first tube (10) is closed at its end opposite the inlet opening (8) by means of a plate (7) acting as a baffle plate for the compressed air;
d) openings (5, 9, 29) for the compressed air are provided in the wall of the first tube (10);
characterized by the following features:
e) a second tube (15, 12) is provided, which is arranged with its one end at the first tube (10) or that is to say at the plate (7) and is there completely or predominantly closed off;
f) the second tube (15, 12) extends towards the outlet-side cover (23);
g) a third tube (24) is provided, which is secured to the associated cover (23) with its one end surrounding the outlet opening (20) and which extends towards the inlet-side cover (2) and projects into the second tube (15, 12);
h) the inner wall of the housing part (1) of the housing (1, 2, 23) or the inner wall of an insert introduced into the housing (1, 2, 23) and the outer surface of the second tube (15, 12) form a first channel (16) for the compressed air, while the inner wall of the second tube (15, 12) and the outer surface of the third tube (24) in the mutually overlapping region of the two tubes (15, 12 and 24) form a second channel (25) for the compressed air which is connected to the first channel (16);
i) a damping material (22) for compressed air flowing through the second channel (25) is arranged in a part of the space bounded by the third tube (24).

2. A noise suppressor according to claim 1, characterized in that the first cover (2), the first tube (10), the second tube (15, 12) and the plate (7) are in the form of a first one-piece unit.

3. A noise suppressor according to claim 1, characterized in that the housing part (1), the second cover (23) and the third tube (24) are in the form of a second one-piece unit.

4. A noise suppressor according to claim 1, characterized in that the housing part (1) with the second cover (23) is in the form of a one-piece cup-shaped housing part (1, 23) which is closed by the first cover (2).

5. A noise suppressor according to at least one of the preceding claims, characterized in that the second tube (15, 12) and the third tube (24) are arranged coaxially with respect to one another and coaxially with respect to the housing (1, 2, 23) and extending in the direction of the longitudinal axis of the housing (1, 2, 23).

6. A noise suppressor according to claim 2 and claim 3, characterized in that the first unit and the second unit are manufactured as injection-moulded plastics parts.

7. A noise suppressor according to at least one of the preceding claims 1 and 2, characterized in that the first tube (10) has a smaller cross-section than the second tube (15, 12).

8. A noise suppressor according to at least one of the preceding claims 1 and 2, characterized in that the second tube (15, 12) has a region (12) tapering conically towards the first tube (10).

9. A noise suppressor according to at least one of the preceding claims, characterized by the following features:
a) a first space serving as an expansion space (11) is created by the outer surface of the first tube (10), an annular face of the cover (2) facing the interior of the housing and at least a part of the inner wall of the housing part (1);
b) a second space (17) in the form of an annular space is created by the region of the third tube (24) not overlapped by the second tube (15, 12) and by an annular face of the second cover (23) facing the interior of the housing and by at least a part of the inner wall of the housing part (1);
c) a third space (13) is created by the region of the inner wall of the second tube (15, 12) not overlapped by the third tube (24) and by the plate (7) and the damping material (22);
d) the first space (11) and the second space (17) are connected to one another by way of the first channel (16, 26) and the third space (13) is connected by way of the second channel (25) to the second space (17);
e) the third space (13) is connected by way of the damping material (22) to the outlet opening (20).

10. A noise suppressor according to claim 9, characterized in that the first channel (16) and the second channel (25) are connected to one another, wherein the first channel (16), starting at the first space (11), extends towards the second cover (23) of the housing (1, 2, 23), is deflected from the free end of the second tube (15, 12), the second cover (23) of the housing (1) and the outer surface of the third tube (24), continues as the second channel (25), this second channel extending towards the side of the plate (7) that limits the second tube (15, 12) and opening into the third space (13) bounded by the plate (7), the inner surface of the second tube (15, 12) and the damping material (22).

11. A noise suppressor according to at least one of the preceding claims, characterized in that the first tube (10), the second tube (15, 12) and the third tube (24) and also the housing (1, 2) are of cylindrical construction.

12. A noise suppressor according to at least one of the preceding claims, characterized in that a tubular insert is arranged in the housing (1, 2, 23) which surrounds the first tube (10), the second tube (15, 12) and the third tube (24).

13. A noise suppressor according to at least one of the preceding claims, characterized in that the part of the second cover (23) bounding the second space (17) is of rounded construction towards the wall of the housing part (1).

14. A noise suppressor according to claim 9, characterized in that the region between the outer surface of the third tube (24) and the part of the second cover (23) bounding the second space (17) is rounded.

15. A noise suppressor according to at least one of the preceding claims, characterized in that a slot (36) in the form of an annular space is provided between the part of the second cover (23) containing the outlet opening (20) and the side of the damping material (22) facing the outlet opening (20).

16. A noise suppressor according to at least one of the preceding claims, characterized in that a pressure relief device is provided in the wall of the second tube (15, 12).

17. A noise suppressor according to at least one of the preceding claims, characterized in that a pressure relief device is provided in the wall of the housing (1, 2).

18. A noise suppressor according to at least one of the preceding claims, characterized in that an opening (30) forming a bypass channel is provided in the wall of the second tube (15, 12).

19. A noise suppressor according to claim 16, characterized in that the pressure relief device is in the form of a rupture joint having an exactly defined cross-section arranged in the second tube (15, 12).

20. A noise suppressor according to claim 16, characterized in that the pressure relief device comprises an opening (30) and a resilient flap (46) closing this opening, which flap can be caused to open into the third expansion space (13).

21. A noise suppressor according to claim 17, characterized in that the pressure relief device is in the form of an exactly defined rupture joint which comprises a wall part (39) that is thinner than the wall of the cup-shaped housing part (1), which wall part (39) is held by an enlargement (38), one side of the enlargement being provided at the wall of the housing part (1) and the other side of the enlargement being connected to the thinner wall part (39).

22. A noise suppressor according to claim 17, characterized by the following features:
a) an opening (31) that is closed by a closure member (32) is provided in the wall of the housing part (1) as the pressure relief device;
b) the closure member (32) is held in the opening (31) by a plate (33) which lies, in position over the closure member (32), against the outer surface of the housing part (1);
c) the plate (33) is held by at least two frame-like holding elements (34 and 35) which are integrally moulded with the outer surface of the housing part (1).

23. A noise suppressor according to claim 22, characterized in that the plate is in the form of a name plate for the noise suppressor.

24. A noise suppressor according to claim 22, characterized in that the plate (33) consists of a resilient material.

25. A noise suppressor according to claim 22, characterized in that the closure member (32) is in the form of a ball.

26. A noise suppressor according to claim 22, characterized in that the closure member is in the form of a stopper.

## Revendications

1. Silencieux pour dispositif d'évacuation d'air comprimé, avec les caractéristiques suivantes :
a) le silencieux présente une enceinte (1, 2, 23) fermée par un couvercle (2, 23) en chacune de ses deux extrémités, une ouverture d'entrée (8) étant prévue dans le premier couvercle (2), et une ouverture de sortie (20), pour la sortie d'air comprimé, étant prévue dans l'autre couvercle (23);
b) à l'ouverture d'entrée (8) se raccorde un premier tube (10) assemblé au couvercle correspondant (2), ce premier tube s'étendant dans l'enceinte (1, 2, 23);
c) le premier tube (10) est fermé, en son extrémité à l'opposé de son ouverture d'entrée (8), au moyen d'une plaque (7) servant de plaque d'impact pour l'air comprimé;
d) des passages (5, 9, 29) pour l'air comprimé sont prévus dans la paroi du premier tube (10);
caractérisé par les caractéristiques suivantes :
e) il est prévu un deuxième tube (15, 12) qui, par sa première extrémité, est agencé sur le premier tube (10) ou encore sur la plaque (7), et est fermé complètement ou presque complètement en cet endroit;
f) le deuxième tube (15, 12) s'étend en direction du couvercle côté sortie (23);
g) il est prévu un troisième tube (24) qui, tout en entourant l'ouverture de sortie (20) par son extrémité, est fixé au couvercle conjugué (23) et s'étend en direction du couvercle (2) côté entrée et pénètre dans le deuxième tube (15, 12);
h) la paroi intérieure de la partie (1) de l'enceinte (1, 2, 23), ou la paroi intérieure d'un insert disposé dans l'enceinte (1, 2, 23), et la surface périphérique extérieure du deuxième tube (15, 12) forment un premier canal (16) pour l'air comprimé, tandis que la paroi intérieure du deuxième tube (15, 12) et la surface périphérique extérieure du troisième tube (24) forment, dans la région où les deux tubes (15, 12 et 24) se recouvrent mutuellement, un deuxième canal (25) pour l'air comprimé, ce deuxième canal étant relié au premier canal (16);
i) dans une partie de l'espace bordé par le troisième tube (24) est agencé un matériau d'amortissement (22) pour l'air comprimé passant par le deuxième canal (25).

2. Silencieux selon revendication 1, caractérisé par le fait que le premier couvercle (2), le premier tube (10), le deuxième tube (15, 12) et la plaque (7) sont réalisés en tant que premier module d'un seul tenant.

3. Silencieux selon revendication 1, caractérisé par le fait que la partie (1) de l'enceinte, le deuxième couvercle (23) et le troisième tube (24) sont réalisés en tant que deuxième module d'un seul tenant.

4. Silencieux selon revendication 1, caractérisé par le fait que la partie (1) de l'enceinte constitue, avec le deuxième couvercle (23) une partie d'enceinte (1, 23) en forme de pot en une seule pièce, laquelle est fermée par le premier couvercle (2).

5. Silencieux selon au moins l'une des revendications précédentes, caractérisé par le fait que le deuxième tube (15, 12) et le troisième tube (24) sont mutuellement coaxiaux et s'étendent coaxialement à l'enceinte (1, 2, 23), en direction de l'axe longitudinal de l'enceinte (1, 2, 23).

6. Silencieux selon revendication 2 et selon revendication 3, caractérisé par le fait que le premier module et le deuxième module sont réalisés sous forme de pièces en matière plastique moulées par injection.

7. Silencieux selon au moins l'une des revendications précédentes, 1 ou 2, caractérisé par le fait que le premier tube (10) présente une section droite plus petite que le deuxième tube (15, 12).

8. Silencieux selon au moins l'une des revendications précédentes, 1 ou 2, caractérisé par le fait que le deuxième tube (15, 12) présente une région (12) s'amincissant en cône en direction du premier tube (10).

9. Silencieux selon au moins l'une des revendications précédentes, caractérisé par les caractéristiques suivantes :
a) la surface périphérique du premier tube (10), une surface annulaire du couvercle (2) tournée vers l'intérieur de l'enceinte et au moins une région partielle de la paroi intérieure de la partie (1) de l'enceinte forment un premier espace servant d'espace d'expansion (11);
b) la région du troisième tube (24) qui n'est pas recouverte par le deuxième tube (15, 12), ainsi qu'une surface annulaire du deuxième couvercle (23) tournée vers le volume intérieur de l'enceinte, et au moins une région partielle de la paroi intérieure de la partie (1) de l'enceinte forment un deuxième espace (17) ayant une configuration d'espace annulaire;
c) la région de la paroi intérieure du deuxième tube (15, 12) qui n'est pas recouverte par le troisième tube (24), ainsi que la plaque (7) et le matériau d'amortissement (22) forment un troisième espace (13);
d) le premier espace (11) et le deuxième espace (17) sont mutuellement reliés par le premier canal (16, 26), et le troisième espace (13) communique avec le deuxième espace (17) via le deuxième canal (25);
e) le troisième espace (13) est relié à l'ouverture de sortie (20) par l'intermédiaire du matériau d'amortissement (22).

10. Silencieux selon revendication 9, caractérisé par le fait que le premier canal (16) et le deuxième canal (25) sont mutuellement reliés, le premier canal (16), commençant au premier espace (11), s'étendant en direction du deuxième couvercle (23) de l'enceinte (1, 2, 23), étant dévié de l'extrémité libre du deuxième tube (15, 12), du deuxième couvercle (23) de l'enceinte (1) et de la surface périphérique extérieure du troisième tube (24), et se raccordant au deuxième canal (25), lequel s'étend en direction du côté de la plaque (7) qui borde le deuxième tube (15, 12), et dans lequel débouche le troisième espace (13) délimité par la plaque (7), par la surface périphérique intérieure du deuxième tube (15, 12) ainsi que par le matériau d'amortissement (22).

11. Silencieux selon au moins l'une des revendications précédentes, caractérisé par le fait que le premier tube (10), le deuxième tube (15, 12) et le troisième tube (24) ainsi que l'enceinte (1, 2) sont de configuration cylindrique.

12. Silencieux selon au moins l'une des revendications précédentes, caractérisé par le fait qu'un élément d'insertion tubulaire est disposé dans l'enceinte (1, 2, 23) et entoure le premier tube (10), le deuxième tube (15, 12) et le troisième tube (24).

13. Silencieux selon au moins l'une des revendications précédentes, caractérisé par le fait que la partie du deuxième couvercle (23) bordant le deuxième espace (17) est arrondie en direction de la paroi de la partie (1) de l'enceinte.

14. Silencieux selon revendication 9, caractérisé par le fait qu'un arrondi est prévu entre la surface périphérique extérieure du troisième tube (24) et la partie du deuxième couvercle (23) qui borde le deuxième espace (17).

15. Silencieux selon au moins l'une des revendications précédentes, caractérisé par le fait qu'un interstice (36) en forme de chambre annulaire est prévu entre la partie du deuxième couvercle (23) présentant l'ouverture de sortie (20) et le côté du matériau d'amortissement (22) tourné vers l'ouverture de sortie (20).

16. Silencieux selon au moins l'une des revendications précédentes, caractérisé par le fait qu'une sécurité contre les surpressions est prévue dans la paroi du deuxième tube (15, 12).

17. Silencieux selon au moins l'une des revendications précédentes, caractérisé par le fait qu'une sécurité contre les surpressions est prévue dans la paroi de l'enceinte (1, 2).

18. Silencieux selon au moins l'une des revendications précédentes, caractérisé par le fait qu'une ouverture (30) formant un canal de dérivation est prévue dans la paroi du deuxième tube (15, 12).

19. Silencieux selon revendication 16, caractérisé par le fait que la sécurité contre les surpressions est réalisée sous la forme d'un point de localisation de rupture présentant une section exactement définie est aménagé dans le deuxième tube (15, 12).

20. Silencieux selon revendication 16, caractérisé par le fait que la sécurité contre les surpressions est constituée par une ouverture (30) et par un clapet (46) élastique obturant cette ouverture, lequel peut être mis en position d'ouverture en direction du troisième espace d'expansion (13).

21. Silencieux selon revendication 17, caractérisé par le fait que la sécurité anti-surpression est réalisée sous la forme d'un point de localisation de rupture exactement défini, lequel est constitué par une partie de paroi plus mince (39) par rapport à la paroi de la partie d'enceinte (1) en forme de pot, cette partie de paroi plus mince étant maintenue par un bourrelet (38) dont un premier côté est prévu sur la paroi de la partie d'enceinte (1) et dont l'autre côté est lié à la partie de paroi plus mince (39).

22. Silencieux selon revendication 17, caractérisé par les caractéristiques suivantes :
a) en tant que sécurité contre les surpressions, il est prévu, dans la paroi de la partie (1) de l'enceinte, une ouverture (31) qui est fermée par un obturateur (32);
b) l'obturateur (32) est maintenu dans l'ouverture (31) par une plaque (33) qui, en recouvrant l'obturateur (32), s'applique sur la surface périphérique de la partie (1) de l'enceinte;
c) la plaque (33) est maintenue par au moins deux éléments de maintien en forme de cadre (34 et 35) qui sont formés sur la surface périphérique de la partie (1) de l'enceinte.

23. Silencieux selon revendication 22, caractérisé par le fait que la plaque est réalisée en tant que plaque de type ou plaque de caractéristiques pour le silencieux.

24. Silencieux selon revendication 22, caractérisé par le fait que la plaque (33) est en une matière élastique.

25. Silencieux selon revendication 22, caractérisé par le fait que l'obturateur (32) est réalisé sous forme de sphère.

26. Silencieux selon revendication 22, caractérisé par le fait que l'obturateur est réalisé en tant que bouchon.
